# EUROPÄISCHE PATENTSCHRIFT

(11) **EP 0 966 369 B1**
(45) Veröffentlichungstag und Bekanntmachung des Hinweises auf die Patenterteilung: **31.10.2001**
(21) Anmeldenummer: 98912462.3
(22) Anmeldetag: 11.03.1998
(51) Int. Cl.: B60R 11/02

(54) **VORRICHTUNG ZUM BETRIEB VON MOBILTELEFONEN IN KRAFTFAHRZEUGEN**
DEVICE FOR OPERATING MOBILE TELEPHONES IN MOTOR VEHICLES
DISPOSITIF PERMETTANT DE FAIRE FONCTIONNER DES TELEPHONES MOBILES DANS DES VEHICULES A MOTEUR

(30) Priorität: 12.03.1997 DE 29704416 U; 12.03.1997 DE 29704417 U; 12.03.1997 DE 29704506 U
(43) Veröffentlichungstag der Anmeldung: 29.12.1999
(73) Patentinhaber: Alac-Elektrik Mechanik Vertrieb GmbH, 57399 Kirchhundem (DE)
(72) Erfinder: NABER, Alfons, D-57399 Kirchhundem (DE)
(74) Vertreter: Strauss, Hans-Jochen, Dipl.-Phys., Dr.
(86) Internationale Anmeldenummer: EP9801385
(87) Internationale Veröffentlichungsnummer: WO9840243

(56) Entgegenhaltungen:
- EP-A- 0 014 749
- DE-A- 4 107 995
- DE-U- 9 409 902
- DE-U- 9 419 679
- DE-U- 29 610 729

## Beschreibung

Die Erfindung betrifft eine Vorrichtung zum Halten und Betreiben von Mobil-Telefonen in Fahrzeugen mit elektrischem Bordnetz, mit einem Gehäuse, in dem eine Schaltungsanordnung mit zumindest einer Anpassungsschaltung für die Antenne vorgesehen ist, mit einem an der Wandung des Cockpits befestigbaren Gehäuse, wobei zur sicheren Spannungsversorgung der Schaltungsanordnung aus dem Bordnetz ein Anschlusskabel mit einem in eine der Steckdosen des Bordnetzes einführbaren und dort festlegbaren Anschluss-Stecker vorgesehen ist.

Es ist bekannt, Mobil-Telefone in Fahrzeugen in Vorrichtungen abzulegen, so dass sie gegriffen und benutzt werden können; solche Vorrichtungen sind als "Passivhalterungen" im Handel. Weiter ist bekannt, Mobiltelefone über die Bordsteckbuchse des Zigarettenanzünders an die Spannungsquelle des Bordnetzes anzuschliessen, um den geräte-eigenen Akkumulator des Mobil-Telefons bei Benutzung in Fahrzeugen nicht übermässig zu beanspruchen. Auch ist wegen der Abschirmung der Fahrzeug-Karosserie bekannt, das Mobil-Telefon an eine Aussenantenne anzuschliessen, was über eine Anpassungschaltung erfolgt. Solche Halterungen werden als "Aktivhalterungen" angeboten. Bekannt sind schliesslich auch Freisprecheinrichtungen für Kraftfahrzeuge, bei denen eine Aktivhalterung, eine Steuereinheit sowie Lautsprecher zur separaten Montage im Kraftfahrzeug angeboten werden. Durch diese Ausbildung sind zumindest die Leitung für die Spannungsversorgung für das Mobil-Telefon, die Zuführung der Ableitung der Aussenantenne an das Gehäuse mit der Anpassungsschaltung und die Antennenzuführung an das Mobil-Telefon als fliegende Kabel verlegt, was zur Unübersichtlichkeit und zu Gefahrenpotentialen im Cockpit des Fahrzeugs führt; darüberhinaus ist dabei die Position des Lautsprechers vorgegeben, er lässt sich nicht so einbauen, dass er optimal für den Fahrer, den Beifahrer oder sonstigen Benutzer des Mobiltelefons im Fahrzeug ausgerichtet ist. Beispielhaft dafür wird hier die DE - U - 94 09 902 genannt.

Über im Inneren eines Kraftfahrzeugs vorgesehene Steckbuchsen können Verbraucher, etwa Zigarettenanzünder oder Leseleuchten (besonders für kartenlesende Beifahrer im Ralley-Bereich) oder Reparatur- oder Pannenleuchten, an das Bordnetz angeschlossen werden. Hier ist zwar eine ständige elektrische Verbindung mit dem Bordnetz erwünscht, jedoch kommt es nicht darauf an, ob kurzzeitige Unterbrechungen etwa der Masse-Verbindung vorhanden sind. Diese Unterbrechungen spielen weder bei Zigarettenanzündern, noch bei Leuchten aller Art eine entscheidende Rolle. Enthalten diese Verbraucher jedoch eine Elektronik, kann auch eine kurzzeitige Unterbrechung der Spannungsversorgung ein "RESET" auslösen; die Elektronik kommt aus dem Takt und versagt. Um solches vermeiden, sind schon Steckverbindungen vorgeschlagen worden, bei denen der Stecker mittels Überwurfmutter an einem Schraubkragen der Steckbuchse oder mit Bajonettverbindung zwischen Stecker und Steckbuchse festgelegt werden. In beiden Fällen bedarf es jedoch einer Abstimmung von Stecker und Steckbuchse, die eine weitgehende Austauschbarkeit solcher Verbraucher ausschliesst.

Daraus ergibt sich die Aufgabenstellung, unter weitgehender Vermeidung fliegender Kabel, die Vorrichtung in einfacher Weise ausrichtbar im Fahrzeug so anzubringen, dass bei einfachem und sicheren Anschluss an das Bordnetz und leichter Lös- bzw. Auswechselbarkeit, ggf. zur Übernahme in ein anderes Fahrzeug, ein sicherer Betrieb ggf. mit Ausbau zur Freisprechanlage möglich ist.

Diese Aufgabe wird gelöst durch die im Hauptanspruch mit den kennzeichnenden Merkmalen beschriebene Ausführungsform; vorteilhafte Weiterbildungen und bevorzugte Ausführungsformen beschreiben die Unteransprüche.

Zur Befestigung im Cockpit eines Fahrzeugs - dies trifft in gleicher Weise für fahrzeug-feste Befestigungen im Cockpit eines Kraftfahrzeugs oder eine fahrzeug-feste Befestigung an anderen Fahrzeugen, etwa Motorrad, Motorboot, Segelboot o.dgl. zu - wird die Innen-Wandung im Cockpit des Fahrzeugs mit Mitteln zum lösbaren Festlegen des Gehäuses, das die Platine mit auf ihr angeordneter Schaltungsanordnung enthält, versehen. Damit kann das Gehäuse festgelegt und wieder abgenommen werden. Zur sicheren Spannungsversorgung der Schaltungsanordnung aus dem Bordnetz ist ein Anschlusskabel mit einem in eine der Steckdosen des Bordnetzes einführbaren und dort festlegbaren Anschlusstecker vorgesehen. Durch das Festlegen ist ein sicherer Anschluss und somit ein störungsfreier Betrieb gewährleistet.

Als ein solches Mittel zum lösbaren Festlegen des Gehäuses ist ein Zentralbolzen, der mit seinem Fuß an geeigneter Stelle fahrzeug-fest angeordnet ist, vorgesehen. An dem Schaft dieses Zentralbolzens wird das Gehäuse der Vorrichtung für das Mobiltelefon formschlüssig aufgesetzt und mit den vorgesehenen Festlege-Mitteln gesichert und zumindest verschwenkbar fixiert. Dazu weist das Gehäuse einen Durchbruch auf, dessen Querschnitt dem des Zentralbolzens entspricht, so dass dieser etwa formschlüssig in den Durchbruch eingeführt werden kann. Als Mittel zum lösbaren Festlegen des Gehäuses an dem Zentralbolzen wird in einer bevorzugten Ausbildung am Gehäuse eine umlaufende Rastnut und am Zentralbolzen zur Rastnut korrespondierende Rastnasen bzw. eine umlaufende Rastleiste vorgesehen. Diese Festlege-Mittel sind vorteilhaft als am Gehäuse vorgesehene Clips-Mittel ausgebildet, wobei der Zentralbolzen mit damit zusammenwirkenden, dazu inversen Clips-Mitteln versehen ist.

Die an der Wandung befestigbare Halterung weist eine Grundplatte auf, auf der mindestens zwei Haltearme als Haltearm-Paar angeordnet sind.

Die freien Enden dieser Haltearme sind mit Rastnasen versehen, die mit den inversen Rastmitteln des Gegenstandes so zusammenwirken, dass ein Verclipsen ermöglicht wird, Weiter ist die Halterung mit einer Druckplatte versehen, die über ein Schuborgan mit an den Haltearmen befestigten Auslegern zusammenwirkt. Bei diesem Zusammenwirken durch einen Druck auf die Druckplatte wird diese niedergedrückt, nimmt über das Schuborgan die Ausleger mit, wodurch die Haltearme gegeneinander gebogen und die Rastnasen somit zurückgezogen werden. Dabei können die Haltearme in sich elastisch nachgebend ausgebildet sein; alternativ können die Haltearme über eine biegsame Anlenkung an der Grundplatte befestigt sein.

Die Ausleger sind bei einer Ausführungsform starr mit den Haltearmen verbunden und bei einer vorteilhaften Ausbildung V-förmig gegen die Grundplatte geneigt. Hier ist als Schubglied eine zentral an der Druckplatte angesetzte Schubstange vorgesehen, die in der Spitze des "V" mit den Auslegern verbunden ist. Bei einer anderen, ebenfalls vorteilhaften Ausbildung sind die starr mit dem zugeordneten der Haltearme verbundenen Ausleger etwa gerade gegeneinander gerichtet. Als Schubglied sind hier zwei seitlich an der Druckplatte angesetzte Schubstäbe vorgesehen, die an den jeweiligen Spitzen der Ausleger schwenkbar befestigt sind. Bei einem gegen die Grundplatte gerichteten Druck auf die Druckplatte nehmen die Schubstange bzw. die Schubstäbe die Enden der Ausleger in Richtung der Grundplatte mit, wodurch die Haltearme gegeneinander verbogen und die Rastnasen aus ihrem Sitz gezogen werden. Zur Erleichterung dieses Mitnehmens sind die Schubstäbe schwenkbar an die Druckplatte angebunden. Als eine solche schwenkbare Anbindung dient auch hier wiederum eine filmscharnierähnliche Wandstärkenverringerung. Während in aller Regel zwei einander gegenüberliegend angeordnete Haltearme vorgesehen sind, ist es bei polygonalen Querschnitten auch möglich, drei im Winkelabstand von 120° zentralsymmetrisch angeordnete Haltearme vorzusehen.

Zur Bildung des Schwenkgelenks zwischen den Schubstäben und den zugeordneten Auslegern weisen bei einer Ausbildungsform die Schubstäbe und/oder die Ausleger der Haltearme Augen auf. Mittels durch die Augen gesteckter Achsen werden so die Schwenkgelenke gebildet. Bei einer anderen Ausbildungsform sind die Schwenkgelenke wiederum durch filmscharnierähnliche Wandstärkenverringerungen gebildet. In beiden Fällen gibt es definierte Stellen, die als Schwenkgelenk ausgebildet oder als Schwenkgelenk wirkend die Bewegbarkeit von Schubstab und zugeordnetem Ausleger sicherstellen.

Um die Ausrichtung der Vorrichtung und die Kabelführungen optimal einrichten zu können, ist das Gehäuse der Vorrichtung um eine zentrale Befestigung verdrehbar eingebaut. Durch diese gewählte Art der Zentralbefestigung des Gehäuses kann dieses in einer solchen Position eingebaut bzw. ausgerichtet werden, die einer optimalen Ausrichtung im Fahrzeug-Inneren entspricht. Mit einem runden Zentralzapfen kann das Gehäuse beliebig verdreht werden, so dass die Ausrichtung stufenlos erfolgt. Vorteilhaft sind hier Mittel vorgesehen, mit denen das Gehäuse in der vorgesehenen und eingestellten Winkellage festgelegt werden kann, und die vorteilhaft als Klemm- oder Rastmittel ausgebildet sind, die das Gehäuse in der gewünschten Lage lösbar fixieren, jedoch ein Verschwenken des Gehäuses auch vom Fahrer mit einem Handgriff erlauben und dazu gelöst werden können. Mit solchen Mitteln wird verhindert, dass sich das Gehäuse entsprechend seiner Schwerpunktlage in eine nicht gewünschte Lage "einpendeln" kann.

Wird in einer anderen Ausführungsform der Zentralbolzen polygon ausgebildet, können gestuft, bestimmte, vom Polygon vorgegebene Winkelstellungen fixiert gestellt werden, wie es die Situation des Anbringungsortes im Cockpit des Fahrzeugs erfordert; hier erübrigt sich das Feststellen des Gehäuses infolge der Fixierung durch das Polygon. Dabei reicht es im allgemeinen aus, wenn eine polygonale Ausbildung zumindest eines gewissen Bereichs des Bolzenschaftes nahe der Wandung des Fahrzeugs vorgesehen ist, mit dem die Unterschale des Gehäuses zusammenwirkt. Dieses polygonale Teilstück reicht aus, um ein Verschwenken des Gehäuses um die vom Polygon vorgegebenen Winkel zu ermöglichen. Bei dieser Bauweise ist es ausreichend, wenn die Festlege-Mittel das Gehäuse auf dem Zentralbolzen halten, einer besonderen Fixierung der Winkelstellung bedarf es hier nicht. Diese Art des Einbaues der Vorrichtung erlaubt auch deren Entnahme und ihr Umsetzen in andere Fahrzeuge, was besonders wichtig ist, wenn ein Mobiltelefonbenutzer mehrere Fahrzeuge benutzt, oder bei Fahrzeug-Flotten von vielen Fahrzeugen, etwa eines (grösseren) Unternehmens oder einer Kraftfahrzeugvermietung.

Vorteilhaft wird das Gehäuse aus einer Oberschale und einer Unterschale zusammengesetzt, die verrastbar zusammenfügbar sind. Dieses so gebildete Gehäuse besitzt aufgrund der Schalenausbildung beider Teile einen Hohlraum zur Aufnahme der Platine, auf der die an sich bekannten Anpassungs- und sonstigen Schaltungen mit ihren elektronischen Bauelementen vorgesehen sind. So ist ein zweischaliges Gehäuse entstanden, das geschlossen und - wenn Bedarf besteht - auch wieder geöffnet werden kann. Darüberhinaus ermöglicht die zweischalige Ausbildung, die dadurch bedingte, umlaufende Ringnut in einfacher Weise als Rastmittel auszunutzen, wobei der Zentralbolzen zur Rastnut korrespondierend Rastnasen bzw. eine umlaufende Rastleiste aufweist, die in diese Ringnut beim Aufsetzen des Gehäuses elastisch einrasten und beim Abnehmen wieder abgezogen werden können, unabhängig von der Querschnittsform des Durchbruchs/Zentralbolzens. Dabei versteht es sich von selbst, dass der Abstand dieser Rastnut von dem freien Ende des Gehäuses dem Abstand der Rastnasen vom freien Ende der Haltearme entspricht.

Bei einer bevorzugten Ausbildung ist am Gehäuse ein abgeflachter Umfangsbereich des Gehäuses mit der Platine vorgesehen, der eine Ausnehmung aufweist, in die ein an der Platine vorgesehenes Steckboard einsetzbar ist. So können in einfacher Weise die für den Betrieb des Mobiltelefons notwendigen Anschlüsse hergestellt werden, auch wenn eine höhere Ausbaustufe - externer Lautsprecher, Head-Set, MUTE-Schaltung des Autoradios u.dgl. - erreicht werden soll. Dabei ist der Anschluss für das Mobiltelefon am Steckboard immer der Schaltung der Anpassungsschaltungen entsprechend; abweichende Eingangsschaltungen der unterschiedlichen Mobiltelefone finden dadurch Berücksichtigung. dass die Plug-In-Stecker entsprechend unterschiedlich verschaltet sind; dies bedeutet zwar, dass für jede nicht kompatible Sorte von Mobiltelefonen ein besonderes Anschlusskabel benötigt wird; Umschaltungen im Bereich der Anpassungsschaltungen und deren Aus- und Eingänge bedarf es jedoch nicht mehr.

Vorteilhaft weist das Gehäuse zumindest einen den Anschluss eines Lautsprechers erlaubenden NF-Anschluss auf. Dieser Anschluss ist bevorzugt als Steckausgang für einen externen Lautsprecher ausgebildet. Als externer Lautsprecher kann - sofern das Autoradio dies erlaubt - dessen Lautsprecher eingesetzt werden. Auf diese Weise kann ein bereits im Fahrzeug vorhandener Lautsprecher zum Einsatz kommen, ein zusätzlicher Lautsprecher, der auch wieder einen Platz bedürfte, ist so überflüssig.

In einer anderen Ausbildung kann an das Gehäuse mindestens ein Lautsprecher angesetzt werden, der vorzugsweise klappbar an das Gehäuse angesetzt ist. Hier können selbstverständlich auch ein Paar Lautsprecher vorgesehen werden, die beidseits des Gehäuses angesetzt werden. Durch die Klappbarkeit ist ein Ausrichten auf den Hörenden ohne weiteres möglich. Der Anschluss erfolgt in einfacher Weise über ein Anschlußkabel, das in der Steckbuchse für externe Lautsprecher angeschlossen wird; alternativ können auch die Klapp-Gelenke der Übertragung der NF-Leistung auf den Lautsprecher dienen, die dazu mit entsprechenden Kontakt-Organen ausgestattet sind.

Zur sicheren Verbindung mit dem in die Steckbuchse einführbaren, zylindrischen Steckerkörper ist dieser mit Klemmitteln versehen und mit diesen Klemmitteln in der Steckbuchse festklemmbar. Dabei sind die Klemmittel so vorgesehen, dass ihre Wirkung etwa diametral gegenüber der Masseverbindung angreift: hier wirken die Klemmkräfte so, dass ein sicherer Massekontakt hergestellt wird. Darüber hinaus verhindern die Klemmkräfte auch, dass der Stecker - etwa infolge einer gebrauchsbedingten Lose oder infolge eines unbeabsichtigten Zuges am Anschlusskabel - aus der Steckbuchse gezogen werden kann.

Vorteilhaft ist als Klemmittel ein Drehschieber vorgesehen, der um die Achse des zylindrischen Steckerkörpers verschwenkbar ist. Dabei weist der Drehschieber einen mit einem Griffansatz versehenen Drehring auf, an den ein Klemmarm angelenkt ist, der sich längs des Mantels des Steckerkörpers erstreckt. Bei Verdrehen des am Steckerkopf geführten Drehringes verlagert sich das freie Ende des Klemmarmes in Abhängigkeit von der Drehrichtung radial nach aussen und bewirkt das Verklemmen bzw. das Lösen der Verklemmung nach innen. So lässt sich das Klemmittel ohne weiteres nach aussen drücken, wo eine Angriffsmöglichkeit gegenüber der Innenwandung der Steckbuchse zum Verspannen der Klemmittel gegeben ist.

Bei einer Ausführungsform ist die spiralige Führung als Umfangsnut ausgebildet, die einen Teil des Umfanges umfasst, wobei diese Umfangsnut bei einem gegenüber dem Körperdurchmesser kleineren Durchmesser beginnend, etwa tangential in die Mantelfläche des zylindrischen Teils des Steckers einläuft. Bei dieser Ausführungsform wird durch die in Art einer schiefen Ebene ansteigenden Führung das freie Ende des Klemmarms beim Verdrehen nach aussen gedrückt, und bei Bewegung in Gegenrichtung nach innen freigegeben. Während ersteres zur gewünschten Klemmwirkung führt, erfolgt bei letzterem die Freigabe zum Lösen durch Aufheben des Klemmens.

Bei einer bevorzugten Ausbildung ist die das Anschlusskabel ausleitende Kabelausleitung um eine zur Achse des Steckers rechtwinklig angeordnete Schwenkachse verschwenkbar an den zylindrischen Steckerteil angelenkt. Diese Ausbildung stellt sicher, dass ein Abknicken des Anschlusskabels im Bereich der Kabelausleitung unterbunden ist. da die angelenkte Kabelausleitung sich entsprechend der notwendigen Kabelführung selbsttätig verschwenkt.

Diese verschwenkbar angelenkte Kabelausleitung kann darüberhinaus auch genutzt werden. um mit elektronischen Bauelementen versehen zu werden, die beispielsweise den Anschluss eines Mobiltelefons erlauben. Im Zusammenhang mit dem Mobiltelefon bietet sich in Weiterbildung auch an, dass die Kabelausleitung mit einem externen Lautsprecher versehen wird. Dabei versteht es sich von selbst, dass die Niederfrequenz über eine gesonderte Leitung - die auch in das Spannungsversorgungskabel integriert sein kann - dem Lautsprecher zugeführt wird. Um die NF-Leitung nicht überdimensionieren zu müssen, ist es weiter vorteilhaft, wenn in der angelenkten Kabelausleitung eine NF-Verstärkung vorgesehen ist, die direkt aus dem Bordnetz gespeist werden kann. Dabei kann auch diese NF-Verstärkung so ausgelegt sein, dass bei Anlegen eines NF-Signals ein Spannungssignal ausgegeben wird, das beispielsweise als MUTE-Signal das Autoradio stumm schaltet während eines Telefongesprächs.

Zumindest der dem Mobiltelefon zugeordnete Ausgang der Schaltungsanordnung ist zu einer Steckbuchse geführt, in die das Anschlusskabel mit mobiltelefonseitigem Anschluss-Stecker (Plug-In-Stecker) mit einem vielpoligen Stecker einsteckbar ist. Hier ist ein Adapterkabel angesprochen, bei dem der schaltungsseitige Vielpol-Stecker ein Anschlussbild entsprechend den Anpassungsschaltungen und der mobiltelefonseitige Stecker (Plug-In-Stecker) das Anschlussbild des angeschlossenen Mobiltelefones aufweist. Bei dieser Art des Anschlusses wird zwar für jede Sorte Mobiltelefon (soweit nicht untereinander kompatibel) ein besonderes Anschlusskabel benötigt, Eingriffe in elektronische Schaltungen entfallen jedoch, was das Umstellen von einer Art des Mobiltelefones auf eine andere erheblich erleichtert.

Da bei Telefonaten über das Mobiltelefon Radiaoübertragungen stören, ist es vorteilhaft, wenn die Anpassungsschaltung ein MUTE-Signal dann erzeugt, wenn ein Telefongespräch geführt wird. Ein Steckausgang für eine ein "MUTE"-Signal zum Stummschalten des Autoradios führende MUTE-Ausgangsleitung ist dabei am Gehäuse vorgesehen. Dieses Signal kann vorteilhaft über die Spannungsversorgungsleitung ausgekoppelt werden; dazu ist der für die Spannungsversorgung eingesetzte, vielpolige Bordnetz-Anschluss-Stecker so ausgebildet, dass das MUTE-Signal von dem Steckeranschluss übernommen und nach Trennung vom Bordspannungs-Anschlusskabel über eine MUTE-Ausgangsleitung gesondert weiterführbar ist. Dieses so ausgeleitete Signal wird dann dem MUTE-Eingang des Autoradios zugeführt, so dass dieses während eines Telefongesprächs stummgeschaltet wird. Auch erlauben die Steckverbinder den Anschluss von Head-Sets, von Kombinationen mit Mikrofon und Ohr- oder Kopfhörer an die Vorrichtung. Hierzu ist es vorteilhaft, wenn der NF-Verstärker der Schaltungsanordnung so ausgebildet Ist. dass das Head-Set mit Mikrofon und Kopf- bzw. Ohrhörer anschliessbar ist. Dadurch wird das Mobiltelefon auch für Ralleyfahrer oder für Motorradfahrer einsetzbar. Der NF-Verstärker weist hier einen Hör- und einen Sprechkanal auf, der erste versorgt den Kopf- bzw. Ohrhörer, der zweite übernimmt das Mikrofonsignal und gibt es an den Eingang des Mobiltelefons für externes Mikrofon weiter. In einer Weiterbildung wird eine Verständigung innerhalb der an eine Vorrichtung angeschlossenen Head-Sets ermöglicht, was sowohl bei Ralley's die Verständigung der beiden Piloten untereinander ermöglicht, und bei Motorradfahren die Verständigung von Fahrer und Beifahrer. Für den Anschluss ist zweckmäßig eine Steckverbindung vorgesehen, so dass auch hier ein Wechsel ohne weiteres möglich ist.

Eine für diese Vorrichtung vorteilhafte Schaltungsanordnung ist dadurch gegeben, dass auf der Platine die Anpassungsschaltung vorgesehen ist. Dabei münden zumindest die dem Mobiltelefon zugeordneten Ein- und Ausgänge der Schaltung in einem Steckerausgang. Ein oder mehrere weitere Steckerausgang/-gänge sind in einem auf die Platine aufgesetzten Steckboard zusammengefasst, wobei neben Mehrpolstecker auch Koaxstecker (Antennenbuchse) oder Steckbuchsen mit wenigen Kontakten - beispielsweise Masse und Bordspannung - vorgesehen ist/sind. Dieses Steckboard liegt vorteilhaft in einer Ausnehmung des Gehäuses so, dass das dem Mobiltelefon zugeordnete Anschlusskabel über einen Anschluss-Stecker direkt anschliessbar ist; für andere, weiter vorhandene Stecker gilt entsprechendes.

Um im Gehäuse hinreichend Platz zu gewinnen, ist die Platine vorteilhaft ringförmig ausgebildet und weist im wesentlichen zentral eine Aussparung für den Zentralbolzen auf, der in diesem Fall die Platine durchsetzt. Auf der Platine ist weiter vorteilhaft ein Niederfrequenzverstärker vorgesehen, zur Erzeugung eines NF-Signals für einen externen oder angesetzten Lautsprecher. Dieser NF-Verstärker wird vorteilhaft als 2-Wege-Verstärker ausgebildet, derart, dass das vom Mobiltelefon abgegebene "Hör"-Signal verstärkt und dem Lautsprecher-Ausgang zugeleitet wird, während ein Signal von einem externen Mikrofon aufgenommen und verstärkt und angepasst an den mit dem Eingang des Mobiltelefons verbundenen Ausgang geführt wird. In einer Abwandlung kann der NF-Verstärker in dem des Mobiltelefons zugeordneten Stecker des Anschlusskabels - oder alternativ - in dem der Stromversorgung dienenen Anschluss-Stecker vorgesehen sein.

Diese so geschaffene Vorrichtung ist einfach zu benutzen und von Fahrzeug zu Fahrzeug umzusetzen, wobei die Stellung des Gehäuses an die Verhältnisse des Cockpits des Kraftfahrzeugs anpassbar sind. Sie erlaubt weiter bei entsprechender Aufrüstung das Freisprechen und/oder den Anschluss eines Head-Sets, wodurch der Einsatz auch auf Motorrädern ermöglicht wird, oder in Ralley-Wagen, deren Fahrer mit Head-Sets ausgerüstet mit der Aussenwelt in Verbindung stehen: Das in die Steckbuchse mittels eines Steckers eingesteckte Kabel führt zum Gehäuse der Vorrichtung. In gleicher Weise wird die Antennenverbindung hergestellt, und ggf. auch eine Niederfrequenzverbindung zu einem externen Lautsprecher, wobei auch der Lautsprecher eines Autoradios als "Hörer" für das Mobiltelefon einsetzbar ist.

Die Ausführungsformen nach dieser Erfindung lassen sich im Kunststoff-Spritzgiessverfahren herstellen, wobei viele dieser Ausbildungsformen sich auch einstückig spritzen lassen. Auf diese Weise werden sowohl Herstellung als auch die Anwendung vereinfacht. Die Vielfalt der verfügbaren Kunststoffe erlaubt eine gezielte Auswahl und somit eine Abstimmung auf den jeweiligen Bedarfsfall, wobei insbesondere das dauerelastische Verhalten von Bedeutung ist, da die Federeigenschaften davon bestimmt sind.

Die in dem Gehäuse vorgesehene Schaltungsanordnung ist vorteilhaft so ausgebildet, dass über einen weiteren Anschluss ein Signal ausgeleitet werden kann, mit dem das Autoradio "stumm" geschaltet werden kann, wobei unterstellt wird, dass das Autoradio einen Eingang für ein externes "MUTE"-Signal aufweist. Dieses Signal wird bei Anliegen eines Signals "Telefonieren" erzeugt und ausgegeben, und es bewirkt als "MUTE"-Signal das Stummschalten eines Autoradios. Hier kann auch das dem Hörer zugehende NF-Signal des Mobiltelefons ausgekoppelt und über ein angeschlossenes NF-Kabel einem NF-Eingang des Autoradios zugeleitet werden, so dass dessen Lautsprecher den Ton des Telefons überträgt. In diesem Fall ist es zweckmässig, wenn die Schaltungsanordnung innerhalb des Gehäuses auch einen NF-Verstärker aufweist, dessen Ausgang (ggf. mit entsprechender Anpassung) an einen Lautsprecher oder an das Autoradio geführt werden kann.

Die Erfindung wird an Hand der in den Figuren 1 bis 9 gezeigten Ausführungsbeispielen näher beschrieben; dabei zeigen
- Figur 01:: Vorrichtung mit Gehäuse und Anschlusskabel für das Mobiltelefon (Totalansicht);
- Figur 02:: Gehäuse der Vorrichtung mit Platine (geschnitten);
- Figur 03:: Zentralbolzen mit aufzusetzendem Gehäuse (stark schematisiert);
- Figur 04:: Gehäuse mit einseitig angesetztem Lautsprecher:
- Figur 05:: Klemmstecker, perspektivische Schema-Ansicht;
- Figur 06:: Klemmstecker, stirnseitige Ansicht;
- Figur 07:: Klemmstecker, Längsschnitt;
- Figur 08:: Klemmstecker, geschnitten gemäß A-A, Fig. 13;
- Figur 09:: Halterung mit Gehäuse (abgebrochen geschnitten, schematische Darstellung).

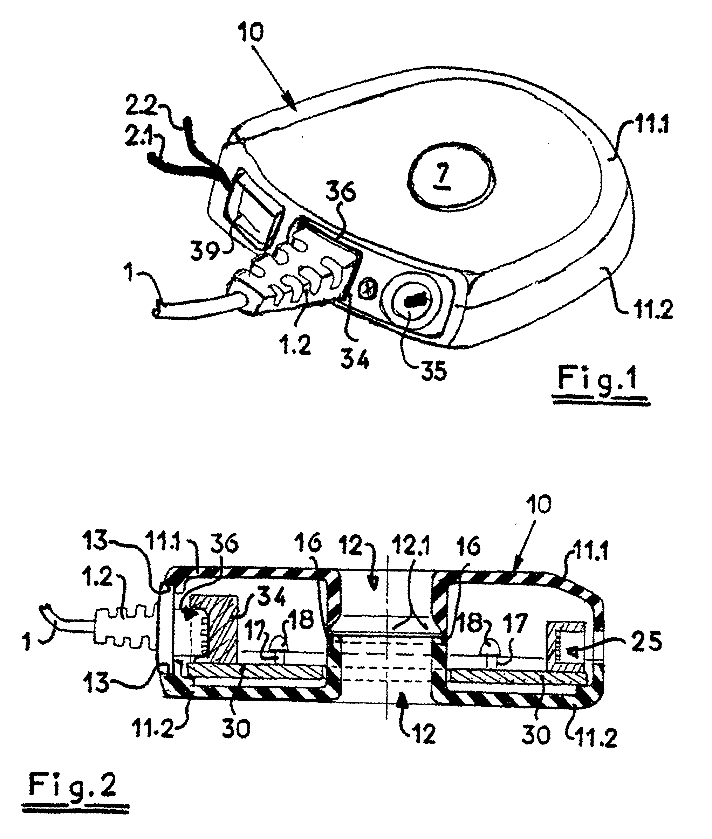

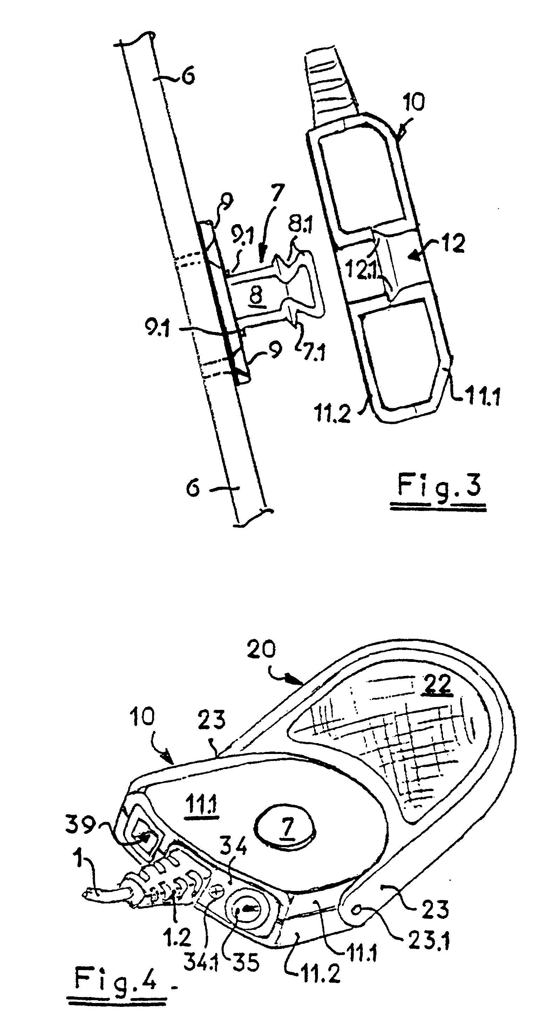

Figur 1 zeigt das Gehäuse 10 der Vorrichtung zum Betrieb eines Mobil-telefons in einem Kraftfahrzeug, das im Schnitt in der Figur 2 näher dargestellt ist. Das Gehäuse 10 ist aus der Oberschale 11.1 und der Unterschale 11.2 zusammengesetzt. Beide Schalen 11.1 und 11.2 sind im Inneren des Gehäuses 10 mit rastenden Verbindungen versehen, die von Rastnasen 17 und die harpunenartig ausgebildeten Spitzen der Rastnasen aufnehmenden und hintergreifenden Rastköpfe 18 gebildet sind. Dadurch ist das Gehäuse - einmal verrastet - von Unbefugten nicht mehr zu öffnen. Die das Gehäuse 10 bildende Schalen 11.1 und 11.2 weisen fluchtend einen zentralen Durchbruch 12 auf, durch den der Zentralbolzen 7 geführt ist. Dieser Durchbruch 12 ist dabei so ausgebildet, dass etwa in halber Höhe eine ringförmig umlaufende. rückspringende Rastnut 12.1 gebildet ist, die mit einer ebenfalls umlaufenden Rastleiste oder mit segmentartig angeformten Rastnasen zusammenwirkend, das Gehäuse 10 an dem Zentralbolzen hält. Vorteilhaft ist ein umlaufender Führungsring 16 vorgesehen, der die beiden gegeneinander stehenden Teile des Durchbruchs fixiert, und der auch mit Rastmitteln versehen sein kann.

Im Inneren des Gehäuses ist weiter die Platine 30 vorgesehen; dazu weist die Unterschale 11.2 des Gehäuses innere Ausformungen auf, die ein Auflager für die Platine 30 bilden. In dem der Frontseite des Gehäuses entsprechenden Bereich der Platine 30 ist ein Steckbuchsenaufsatz aufgesetzt und mit den Leiterbahnen für Aus- und Eingänge der Platine so verbunden, dass die entprechenden Leiter über in die Steckbuchse einführbare Stecker ausgeleitet werden können.

Auf der Frontseite ist der Stromversorgungseingang der Vorrichtung über den Bordnetz-Eingangsstecker 39 und die Bordnetzleitung 2.1 mit dem elektrischen Bordnetz verbunden. In der dargestellten Ausbildung wird über diesen Bordnetz-Eingangsstecker 39 auch (über eine gesonderte Leitung 2.2 ausgekoppeltes) ein Signal ausgeleitet, das bei ein- oder ausgehenden Gesprächen ein evtl. vorhandenes und eingeschaltetes Autoradio "stumm" schaltet; es versteht sich dabei von selbst, dass dieses "MUTE-Signal" auch über separate Stecker ausgegeben werden kann. In der Darstellung der Figur 2 ist - gegenüber der Frontseite - ein weiterer Ausgang mit einem Steckerausgang 25 vorgesehen; hier kann beispielsweise ein separater Lautsprecher angeschlossen werden.

Weiter befindet sich auf der Frontseite der Anschluss für das Mobil-telefon; dieses ist über das Mobiltelefonkabel 1, dessen vorrichtungsseitiges Ende mit dem Vielpolstecker 1.2 versehen ist, mit der Vorrichtung verbunden; zur Anbindung an Hochfrequenzein- und -ausgänge ist weiter ein Antenneneingang 35 vorgesehen, eingerichtet zur Aufnahme eines KOAX-Kabels.

Figur 3 zeigt in stark schematisierter Form das Anbringen der Vorrichtung im Inneren der Karosserie eines Kraftfahrzeugs. An einer (schrägliegend dargestellten) Wandung 6 im Inneren des Kraftfahrzeugs ist der Zentralbolzen 7 mit seinem Fuß 9 aufgesetzt und mit den Schrauben fixiert; dabei stellt ein Bund 9.1 sicher, dass das Gehäuse gegenüber der Achse des Zentralbolzens 7 verdreht werden kann. Der Zentalbolzen 7 weist einen Bolzenschaft 8 auf, der im wesentlichen formschlüssig mit dem zylindrischen Teil des Durchbruches 12 zusammenwirkt, deren umlaufende Rastnut 12.1 beim Zusammenstecken die umlaufende Rastleiste 7.1 aufnimmt. Die Ausbildung des Kopfes des Zentralbolzens ist dabei so, dass er bündig in dem Durchbruch liegt. Hier versteht es sich von selbst, dass auch eine aufsetzbare Deckscheibe vorgesehen werden kann, die auch das Gehäuse 10 am Zentralbolzen 7 hält, und die zwischen beiden wirkende Rastverbindung überflüssig werden lässt.

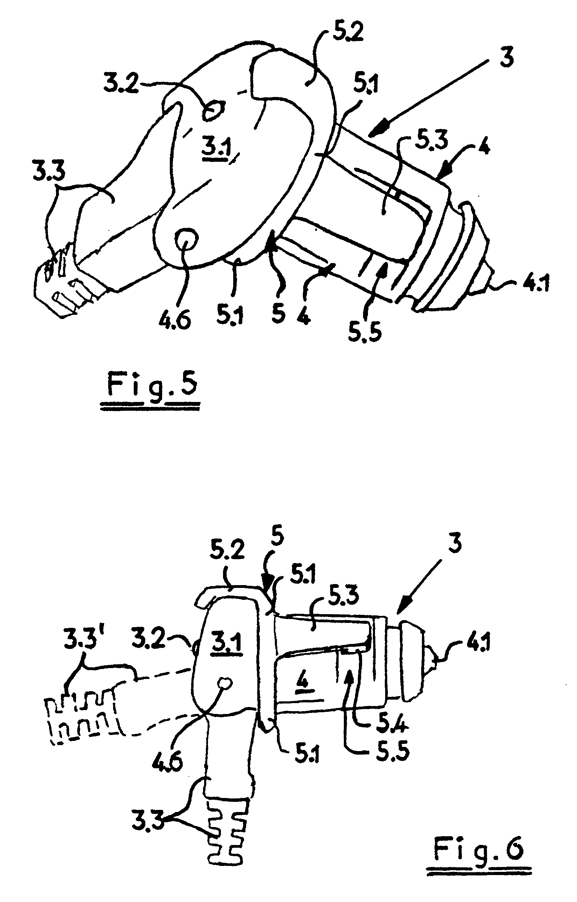

Figur 4 zeigt eine Ausführungsform des Gehäuses 10, bei der der Lautsprecher 20 an das um den Zentralbolzen 7 schwenkbare Gehäuse 10 angelenkt ist. Das aus der Ebene des Gehäuses 10 ausgeschwenkte Lautsprechergehäuse 22 ist mit Armen 23 versehen, die in den Gelenken 23.1 am Gehäuse 10 der Vorrichtung gehalten sind, und über die auch die Niederfrequenz-Zuleitung für den Lautsprecher 20 geführt werden kann; hier versteht es sich von selbst, dass diese NF-Zuleitung auch über ein separates Kabel, angeschlossen beispielsweise an dem Hilfsanschluss 25 (Fig. 2). geführt sein kann, wobei in diesem Fall eine Kontaktsicherheit der Gelenke 23.1 überflüssig ist. Das Steckboard 34 mit dem Bordnetz-Eingang 39, dem Antennen-Eingang 35 sowie mit dem Anschlusskabel 1 mit Stecker 1.2 für das Mobiltelefon ist hier mittels einer Schraubverbindung 34.1 zusätzlich befestigt. Dabei erscheint auch eine Anlenkung des Lautsprechers an den Bordnetz-Anschluss-Stecker 3 selbstverständlich.

Die Anschlussbuchse für den Bordnetz-Anschluss-Stecker 3 bildet im allgemeinen die (hier nicht näher dargestellte) Steckbuchse des Zigarettenanzünders. Der Anschluss-Stecker 3 ist mit einem Steckerkopf 3.1 und einem in die Steckbuchse einführbaren Steckerkörper 4 versehen; zum einen verläuft in diesem Steckerkörper 4 der Spannungsanschluss-Stift 4.1, während die Masse-Verbindung mittels einer Anschlussfahne 4.2 hergestellt wird, die an der Masse-Buchse der Steckbuchse anliegt. Um den Anschluss-Stecker 3 in der Steckbuchse festlegen zu können, ist ein Drehschieber 5 vorgesehen. Diese Klemmvorrichtung weist einen im Bereich des Steckerkopfes liegenden Klemmring 5.1 auf, der mit einer Greifnase 5.2 versehen ist, die den Kopf 3.1 des Anschluss-Steckers 3 übergreift und ein Verdrehen des Klemmrings 5.1 erlaubt. In entgegengesetzter Richtung erstreckt sich bis nahe dem freien Ende des Steckerkörpers 4 ein Klemmarm 5.3, dessen freies Ende eine einen Gleitstein 5.4 bildende Verdickung aufweist, die in einer ansteigenden Führungsbahn 5.5 geführt, beim Verdrehen des Klemmringes 5.1 den Klemmarm 5.3 nach aussen drückt. so dass die gewünschte Klemmwirkung gegenüber der Steckbuchse eintritt. Das Verdrehen erfolgt in der Darstellung entgegen dem Uhrzeigersinn, so dass der Klemmarm 5.3 im gespannten Zustand etwa diametral gegenüber der Anschlussfahne 4.2 zu liegen kommt und einen Moment so auf den Stekkerkörper 4 wirkt, dass die durch die Anschlussfahne 4.2 hergestellte Masse-Verbindung sicher wird.

Als Bordnetz-Anschluss-Stecker wird vorteilhaft der in den Figuren 5 bis 8 in Einzelheiten dargestellte Klemmstecker 3 eingesetzt; dieser weist einen Steckerkopf 3.1 mit einem im allgemeinen zweischalig aufgebauten Steckerkörper 4 auf; an ihm ist der die beiden Schalen zusammenhaltende und die Verriegelung des in die Steckbuchse gesteckten Klemmsteckers bewirkende Rastring vorgesehen. Zentral im Stecker ist der Kontaktstift 4.1 angeordnet, der beim Stecken des Klemmstekckers 3 in eine entsprechende Steckbuchse mit dem einen Pol des Bordnetzes in Verbindung gebracht wird, während der andere Pol - im allgemeinen der Massepol - über eine Kontaktfahne 4.2 an dem entsprechenden Gegenkontakt des zweiten Pols des Bordnetzes in der Steckbuchse anliegt. Auf der Aussenseite des Steckerkopfes 3.1 kann eine Leuchtdiode 3.2 angeordnet sein, die den Betriebszustand signalisiert. Zur Führung des abgehenden Kabels ist eine Kabelausleitung 3.3 mit einem Knickschutz über die Schwenkverbindung 4.6 an den Steckerkopf 3.1 angelenkt (Fig. 6: Geschwenkte Kabelausleitung 3.3' mit Knickschutz strichliert).

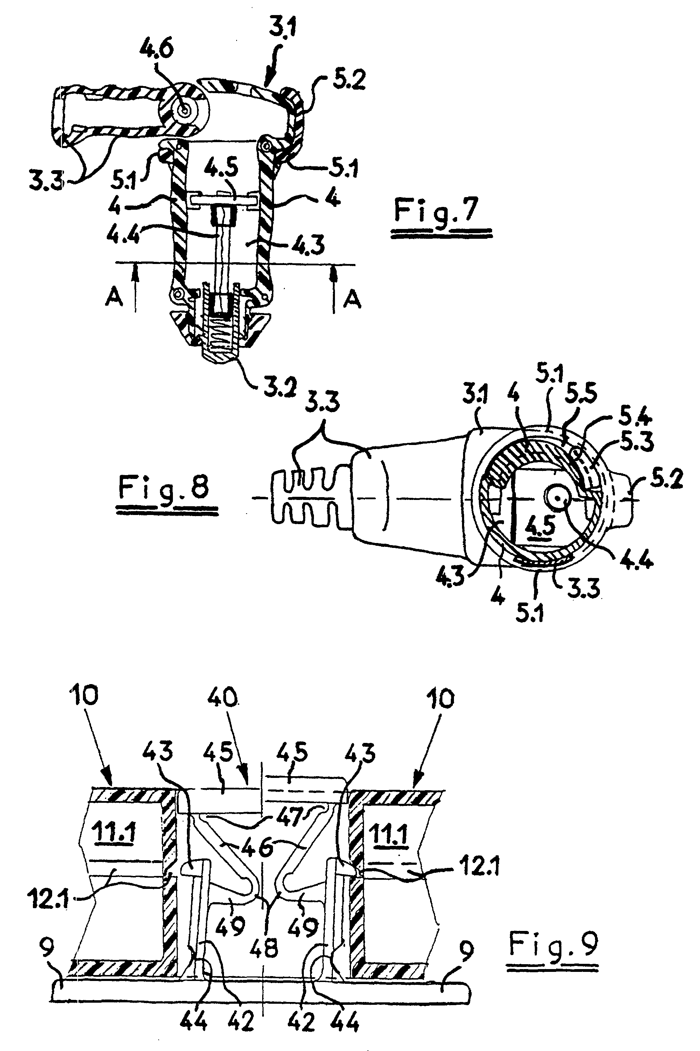

Zum Festsetzen des Klemmsteckers 3 in der (nicht näher dargestellten) Bordnetz-Steckbuchse ist ein Drehschieber 5 vorgesehen, der mit dem Drehring 5.1 um die Achse des Steckerkörpers 4 verschwenkt werden kann. Um dieses Verschwenken zu bewirken, übergreift eine Greifnase 5.2 den Steckerkopf 3.1, so dass die Greifnase 5.2 mit den Fingern der Hand eines Bedieners von Klemmposition in gelöste Position oder umgekehrt verschoben werden kann. Am Drehring 5.1 ist ein längs des Steckerkörpers 4 liegender Klemmarm 5.3 vorgesehen, dessen freies Ende eine einen Gleitstein 5.4-bildende Verdickung aufweist. Dieser Gleitstein 5.4 ist in einer Führungsbahn 5.5 geführt, die spiralig so ausgebildet ist, dass der Klemmarm 5.3 in gelöster Stellung im Mantelbereich des Steckerkörpers 4 liegt, beim Verdrehen in Klemmstellung jedoch aus diesem Mantelbereich heraustritt und gegen die Innen-wandung der (nicht näher dargestellten) Steckbuchse klemmend angedrückt wird. Diese spiralige Führung 5.5 ist in dem in der Figur 8 dargestellten Schnitt A-A (Fig. 7) zu erkennen, wobei die eine gekrümmte, schiefe Ebene bildende Führung 5.5 überhöht dargestellt ist. Dabei ist der Schnitt so gelegt und wird so gesehen, dass eine zentrale Kammer 4.3 erkennbar ist, in die eine Sicherung in Form einer Glasrohr-Feinsicherung 4.4 eingesetzt werden kann; dabei ist vorteilhaft, wenn der Anschluss-Stift 4.1 als federnder Stift ausgebildet ist. Es versteht sich dabei von selbst, dass der Klemmstecker mit durchgehendem Spannungs-Anschluss-Stift 4.1 ausgebildet sein kann.

Der Klemmstecker 3 ist mit einem Hohlraum versehen, der eine zentrale Kammer 4.3 bildet, die in ihrem Inneren auch Raum für eine einzusetzende Platine 4.5 mit einer elektronischen Schaltung bietet, die aus der Bordspannungs-Quelle über den federnden Kontaktstift 4.1 mit Glasrohr-Feinsicherung 4.4 und die seitliche Kontaktfahne Masse-Anschlussfahne 4.2 versorgt wird. Diese Schaltung kann beispielsweise als Niederfrequenzverstärker ausgebildet sein. Dieser Niederfrequenzverstärker wird über ein NF-Kabel (das auch mit dem abgehenden Bordspannungskabel vereint sein kann) angesteuert und gibt seine Ausgangsleistung an einen Lautsprecher 21 ab, der beispielsweise auch in der angelenkten Kabelausleitung 3.3 eingesetzt sein kann. Diese Ausbildung erlaubt es, beispielsweise den NF-Ausgang eines Mobiltelefons auf einen in die Steckbuchse einer Bordspannungsversorgung einzusetzenden Stekker zu geben, um zumindest "Lauthören" zu können, wobei, wenn das Mikrofon des Mobiltelefons selbst aktiv ist, auch ein Freisprechen ermöglicht wird.

Die Figur 9 zeigt eine Halterung 40 mit dem aufgeclipsten Gehäuse 10, geschnitten und geteilt, wobei die Halterung 40 in der rechten Hälfte eingerastet und der linken Hälfte ausgerastet dargestellt ist. Das aufgeclipste Gehäuse 10 besteht aus den beiden (abgebrochen dargestellten) Schalen 11.1 und 11.2, wobei deren Verbindung die Rastnut 12.1 bildet. Auf der Grundplatte 41 sind die Haltearme 42 angeordnet, deren freie Enden mit den Rastnasen 43 versehen sind. Eine filmscharnierähnliche Wandstärkenverringerung bildet hier die Anlenkung 44 an die Grundplatte 41, so dass die Haltearme 42 gegenüber der Grundplatte 41 verschwenkbar und die Rastnasen 43 aus der Rastnut 12.1 aushebbar sind.

Zum Verschwenken der Haltearme 42 sind Schubstäbe 46 vorgesehen, die an eine Druckplatte 45 angebunden sind. Die Anbindung 47 wird auch hier von filmscharnierähnlichen Wandstärkenverringerungen gebildet. Diese Schubstäbe 46 wirken auf die freien Enden von an den Haltearmen 42 starr befestigten Auslegern 49, mit denen diese Schubstäbe 46 über jeweils ein Schwenkgelenk 48 verschwenkbar miteinander verbunden sind. Dieses Schwenkgelenk 48 wird in der Darstellung wiederum von einer filmscharnierähnlichen Wandstärkenverringerung gebildet. Die so ausgebaute Halterung mit den beiden einander gegenüberliegend angeordneten Haltearmen 42, der Druckplatte 45 und den Schuborganen, gebildet von den an den Auslegern 49 angreifenden Schubstäben 46, sowie den von filmscharnierähnlichen Wandstärkenverringerungen gelenkigen Verbindungen, der Grundplatten-Anlenkung 44, dem Schwenkgelenk 48 und der Druckplatten-Anbindung 47, lässt sich einstückig spritzen und somit wirtschaftlich auch in grossen Stückzahlen herstellen.

## Patentansprüche

1. Vorrichtung zum Halten und Betreiben von Mobil-Telefonen in Fahrzeugen mit elektrischem Bordnetz. mit einem Gehäuse, in dem eine Schaltungsanordnung mit zumindest einer Anpassungsschaltung für die Antenne vorgesehen ist, mit einem an der Wandung des Cockpits befestigbaren Gehäuse, wobei zur sicheren Spannungsversorgung der Schaltungsanordnung aus dem Bordnetz ein Anschlusskabel (2.1) mit einem in eine der Steckdosen des Bordnetzes einführbaren und dort festlegbaren Anschluss-Stecker (2; 3) vorgesehen ist, **dadurch gekennzeichnet, dass** die Innen-Wandung im Cockpit des Fahrzeugs Mittel zum lösbaren Festlegen des die Platine (30) mit auf ihr angeordneter Schaltungsanordnung enthaltenden Gehäuses (10) aufweist, wobei als Mittel zum lösbaren Festlegen des Gehäuses ein ein Verschwenken des Gehäuses (10) erlaubender Zentralbolzen (7) mit Bolzenfuß (9) und Bolzenschaft (8) vorgesehen ist.

2. Vorrichtung nach Anspruch 1, **dadurch gekennzeichnet, dass** das Gehäuse (10) und/oder der Zentralbolzen (7) mit miteinander zusammenwirkenden, zueinander inversen Clips- oder Rast-Mitteln versehen sind, wobei Gehäuse (10) und Platine (30) einen Durchbruch (12) zum Durchführen des Zentralbolzens (7), der dieses Gehäuse (10) zumindest in Teilen formschlüssig und verschwenkbar aufnimmt, aufweisen.

3. Vorrichtung nach Anspruch 2, **dadurch gekennzeichnet, dass** als Zentralbolzen (7) eine Halterung (40) mit auf einer an der Wandung befestigbaren Grundplatte (41) vorgesehen ist, auf der mindestens zwei Haltearme (42) als Haltearm-Paar angeordnet sind, deren Enden mit Rastnasen (43) versehen mit den inversen Rastmitteln des Gehäuses (10) zusammenwirken, sowie durch eine Druckplatte (45), die über ein Schuborgan mit an den Haltearmen (42) befestigten Auslegern (49) so zusammenwirken, dass bei Druck auf die Druckplatte (45) die Haltearme (42) gegeneinander gebogen werden.

4. Vorrichtung nach einem der Ansprüche 1 bis 3, **dadurch gekennzeichnet, dass** das Gehäuse (10) gebildet ist von einer Oberschale (11.1) und einer Unterschale (11.2), die verrastbar zusammenfügbar sind, wobei das Gehäuse (10) eine umlaufende Rastnut (12.1) und der Zentralbolzen (7) zur Rastnut (12.1) korrespondierende Rastnasen bzw. eine umlaufende Rastleiste (7.1) aufweisen.

5. Vorrichtung nach Anspruch 4, **dadurch gekennzeichnet, dass** das die Platine (30) aufnehmende Gehäuse (10) einen abgeflachten Umfangsbereich aufweist, an dem eine Ausnehmung (13) vorgesehen ist, zur Aufnahme eines an der Platine (30) vorgesehenen Steckboards (34).

6. Vorrichtung nach einem der Ansprüche 1 bis 5, **dadurch gekennzeichnet, dass** das Gehäuse (10) zumindest mit einem NF-Anschluss versehen ist, zum Anschluss eines Lautsprechers, der vorzugsweise als Steckerausgang (25) für einen externen Lautsprecher ausgebildet ist, wobei als externer Lautsprecher vorzugsweise der des Autoradios anschliessbar ist.

7. Vorrichtung nach einem der Ansprüche 1 bis 6. **dadurch gekennzeichnet, dass** an das Gehäuse (10) mindestens ein Lautsprechergehäuse (22) mit Lautsprecher ansetzbar ist, wobei der Lautsprecher vorzugsweise klappbar an das Gehäuse (10) angesetzt ist, und das Lautsprechergehäuse (22) beidseits Arme (23) aufweist, die seitlich an das Gehäuse (10) angelenkt sind, wobei die Arme (23) mit NF-Anschlüssen (24) versehen sind, die im Gelenkbereich mit einem dort vorgesehenen NF-Ausgang in Kontaktverbindung stehen.

8. Vorrichtung nach einem der Ansprüche 1 bis 7, **dadurch gekennzeichnet, dass** zur Spannungsversorgung aus dem Bordnetz ein Anschlusskabel (2) mit einem als Klemmstecker ausgebildeten Anschluss-Stecker (3) vorgesehen ist, der, eingesteckt in die Steckbuchse, dort verriegelbar ist, vorzugsweise mittels mit an dem in die Steckbuchse einführbaren, zylindrischen Steckerkörper (4) vorgesehenen Klemmitteln.

9. Vorrichtung nach Anspruch 8, **dadurch gekennzeichnet, dass** als Klemmittel ein Drehschieber (5) vorgesehen ist, der um die Achse des zylindrischen Steckerkörpers (4) verschwenkbar ist, wobei der Drehschieber (5) einen am Steckerkopf (3.1) geführten Drehring (5.1) aufweist, an den ein Klemmarm (5.3) angesetzt ist, dessen freies Ende in einer spriraligen Führungsbahn (5.5) geführt, sich beim Verdrehen in Abhängigkeit von der Drehrichtung radial nach aussen bzw. nach innen verlagert, wobei das freie Ende des Klemmarmes (5.3) als Gleitstein (5.4) ausgebildet ist, und wobei die spiralige Führungsbahn (5.5) eine einen Teil des Umfanges umfassende Umfangsnut bildet, die bei einem gegenüber dem Durchmesser des Steckerkörpers (4) kleineren Durchmesser beginnend, etwa tangential in die Mantelfläche des Stekkerkörpers (4) einläuft.

10. Vorrichtung nach Anspruch 8 oder 9, **dadurch gekennzeichnet, dass** die das Anschlusskabel ausleitende Kabelausführung (3.3) über ein Gelenk (4.6) mit rechtwinklig zur Achse des Steckers angeordnete Schwenkachse verschwenkbar an den Steckerkopf (3.1) angelenkt ist.

11. Vorrichtung nach einem der Ansprüche 1 bis 10, **dadurch gekennzeichnet, dass** der Steckerkopf (3.1) oder die schwenkbar angelenkte Kabelausführung (3.3) einen Hohlraum aufweist, zur Aufnahme elektronischer, vorzugsweise auf einer Platine (4.5) angeordneter Bauteile, wobei vorzugsweise zwischen dem Spannungsanschluss-Stift (4.1) und der Platine (4.5) eine zentrale Kammer (4.3) vorgesehen ist, insbesondere zur Aufnahme eines Sicherungsröhrchens (4.4).

12. Vorrichtung nach Anspruch 11, **dadurch gekennzeichnet, dass** die im Steckerkopf (3.1) oder in der schwenkbar angelenkten Kabelausführung (3.3) vorgesehene Elektronik einen NF-Verstärker sowie eine Anschlussbuchse für einen externen Lautsprecher aufweist.

13. Schaltungsanordnung für die Vorrichtung nach einem der Ansprüche 1 bis 12, **dadurch gekennzeichnet, dass** von der NF-Verstärkung ein MUTE-Signal dann erzeugt und zum Stummschalten des Autoradios ausgeleitet wird, wenn zu verstärkende Niederfrequenz anliegt, wobei vorzugsweise die das MUTE-Signal erzeugenden Bauteile eine Zeitkonstante aufweisen, die Sprechpausen am Telefon zu überbrücken in der Lage ist.

14. Schaltungsanordnung nach Anspruch 13, **dadurch gekennzeichnet, dass** zumindest der dem Mobiltelefon zugeordnete Ausgang der Schaltungsanordnung zu einer Steckbuchse (36) geführt ist, in die das Anschlusskabel (1) mit mobiltelefonseitigem Anschluss-Stecker (Plug-In-Stecker) (1.2) mit einem vielpoligen Stecker einsteckbar ist.

15. Schaltungsanordnung nach Anspruch 13 oder 14, **dadurch gekennzeichnet, dass** ein Steckerausgang für eine Niederfrequenzverbindung für mindestens ein Head-Set, bestehend aus Kopf- oder Ohrhörer und Mikrofon vorgesehen ist.

16. Schaltungsanordnung mit einer Anpassungsschaltung für die Antennenanpassung, sowie einer Anpassungsschaltung für die Anpassung der (Lade-)Spannungsversorgung nach einem der Ansprüche 13 bis 15, **dadurch gekennzeichnet, dass** die Anpassungsschaltungen auf einer Platine (30) vorgesehen sind, wobei zumindest die dem Mobiltelefon zugeordneten Ein- und Ausgänge der Schaltung in einem Steckerausgang (36) münden, wobei zumindest einer der Steckerausgänge (36; 37; 37.1; 38) und/oder der Steckereingang (39) auf einem auf die Platine (30) aufgesetzten Steckboard (34) vorgesehen ist/sind, das in einer Ausnehmung (13) des Gehäuses (10) so liegen, dass das dem Mobiltelefon zugeordnete Anschlusskabel (1) über einen Anschluss-Stecker (1.2) direkt anschliessbar ist.

17. Schaltungsanordnung nach einem der Ansprüche 13 bis 16, **dadurch gekennzeichnet, dass** ein Niederfrequenzverstärker vorgesehen ist, zur Erzeugung eines NF-Signals für einen externen oder angesetzten Lautsprecher (20). wobei der NF-Verstärker vorzugsweise als 2-Wege-Verstärker ausgebildet ist, derart, dass das vom Mobiltelefon abgegebene "Hör"-Signal verstärkt und dem Lautsprecher-Ausgang zugeleitet wird, während ein Signal von einem externen Mikrofon aufgenommen und verstärkt und angepasst an den mit dem Eingang des Mobiltelefons verbundenen Ausgang geführt wird.

18. Schaltungsanordnung nach Anspruch 16 oder 17, **dadurch gekennzeichnet, dass** der NF-Verstärker in dem des Mobiltelefons zugeordneten Stecker (1.2) des Anschlusskabels (1) vorgesehen ist.

19. Schaltungsanordnung nach einem der Ansprüche 13 bis 18, **dadurch gekennzeichnet, dass** bei Anliegen eines Signals "Telefonieren" ein Signal erzeugt und ausgegeben wird, das als "MUTE"-Signal das Stummschalten eines Autoradios bewirkt.

## Claims

1. A device for holding and operating mobile telephones in vehicles with an in-vehicle electrical system, including a housing in which a circuit arrangement with at least one accommodating connection for the antenna is provided, with a housing adapted to be mounted on the wall of the cockpit, wherein for the secure supply of voltage to the circuit arrangement from the in-vehicle system a connecting lead (2.1) is provided, having a connector (2; 3) which can be inserted into one of the sockets of the in-vehicle system and secured there, **characterised in that** the inside wall of the cockpit of the vehicle has means for detachably fixing the housing (10) containing the circuit board (30) with a circuit arrangement disposed on it, wherein a central pin (7) with a pin foot (9) and pin shaft (8), which central pin allows the housing (10) to pivot, is provided as a means of detachably fixing the housing (10).

2. Device as claimed in Claim 1, **characterised in that** the housing (10) and/or the central pin (7) are provided with cooperating clipping or locking means which are inverse relative to each other, wherein the housing (10) and the circuit board (30) have an opening (12) for the central pin (7) to pass therethrough, which receives this housing (10) positively and pivotably, at least in part.

3. Device as claimed in Claim 2, **characterised in that** a mounting (40) with a base plate (41) adapted to be fixed to the wall is provided, on which at least two holding arms (42) are arranged as a pair of holding arms, the ends of which, provided with locking lugs (43), cooperate with the inverse locking means of the housing (10), and by a pressure plate (45) which cooperates via a pushing means with brackets (49) fixed to the holding arms in such a way that when pressure is applied to the pressure plate (45), the holding arms are bent towards each other.

4. Device as claimed in any one of Claims 1 to 3, **characterised in that** the housing (10) is formed by a top shell (11.1) and a bottom shell (11.2) which can be lockably joined together, wherein the housing (10) has a surrounding locking groove (12.1) and the central pin (7) has locking lugs corresponding to the locking groove (12.1) or a surrounding locking strip (7.1).

5. Device as claimed in Claim 4, **characterised in that** the housing (10) which receives the circuit board (30) has a flattened peripheral area on which a recess (13) is provided to receive a plug-in board (34) provided on the circuit board (30).

6. Device as claimed in any one of Claims 1 to 5, **characterised in that** the housing (10) is provided with at least a low-frequency connection for connecting a loudspeaker, which is preferably designed as a connector output (25) for an external loudspeaker, wherein the car radio's loudspeaker is preferably connectable as the external loudspeaker.

7. Device as claimed in any one of Claims 1 to 6, **characterised in that** at least one loudspeaker housing (22) with loudspeaker can be attached to the housing (10), wherein the loudspeaker is preferably foldably attached to the housing (10), and the loudspeaker housing (22) has arms on both sides which are laterally hinged to the housing (10), wherein the arms (23) are provided with low-frequency connections which in the hinged area are in contact with a low-frequency output which is provided there.

8. Device as claimed in any one of Claims 1 to 7, **characterised in that** for supplying voltage from the in-vehicle system, a connection lead (2) having a connector (3) designed as a clamped connector is provided, which connector (3) when inserted in the socket may be locked there preferably by means of clamping means provided with cylindrical connector bodies (4) adapted to be inserted into the socket.

9. Device as claimed in Claim 8, **characterised in that** a rotary slide (5) which is pivotable about the axis of the cylindrical connector body (4) is provided as a clamping means, wherein the rotary slide (5) has a rotating ring (5.1) carried on the connector head (3.1), to which ring a clamping arm (5.3) is attached, the free end of which is guided in a spiral guide patch (5.5), is displaced radially inwards or outwards when turning, depending on the direction of rotation, wherein the free end of the clamping arm (5.3) is formed as a slide ring (5.4), and wherein the spiral guide path (5.5) forms part of the peripheral groove surrounding part of the periphery, which peripheral groove, starting at a smaller diameter compared with the diameter of the connector body (4), runs approximately tangentially into the generated surface of the connector body.

10. Device as claimed in Claim 8 or 9, **characterised in that** the cable lead-out (3.3) which leads out the connecting lead is pivotably hinged to the connector head (3.1) via a hinge (4.6) with a pivoting axis located at right angles to the axis of the connector.

11. Device as claimed in any one of Claims 1 to 10, **characterised in that** the connector head (3.1) or the pivotably hinged cable lead-out (3.3) has a hollow space for receiving electronic components preferably arranged on a circuit board (4.5), wherein a central chamber (4.3) is provided, preferably between the voltage connection pin (4.1) and the circuit board (4.5), in particular for receiving a locking tube (4.4).

12. Device as claimed in Claim 11, **characterised in that** the electronics provided in the connector head (3.1) or the pivotably hinged cable lead-out (3.3) include a low-frequency amplifier and a connection socket for an external loudspeaker.

13. Circuit arrangement for the device as claimed in any one of Claims 1 to 12, **characterised in that** a MUTE signal is generated by the low-frequency amplifier and sent out when low frequency requiring amplification is present, wherein the components generating the MUTE signal preferably have a time constant which is capable of bridging speech breaks during telephone calls.

14. Circuit arrangement as claimed in Claim 13, **characterised in that** at least the output of the circuit arrangement which is allocated to the mobile telephone is guided to a socket (36) into which the connection lead (1) with mobile-telephone-side connector (plug-in connector) (1.2) with a multi-pin connector is adapted to be inserted.

15. Circuit arrangement as claimed in Claim 13 or 14, **characterised in that** a connector output for a low-frequency connection for at least one headset consisting of headphones or earpieces and a microphone is provided.

16. Circuit arrangement having an accommodating connection for accommodating the antenna and an accommodating connection for accommodating the (charging) voltage supply as claimed in any one of Claims 13 to 15, **characterised in that** the accommodating connections are provided on a circuit board (30), wherein at least the inputs and outputs of the circuit that are allocated to the mobile telephone terminate in a connector output (36), wherein at least one of the connector outputs (36; 37; 37.1; 38) and/or the connector input (39) is/are provided on a plug-in board (34) placed on the circuit board (30), which board lies in a recess (13) in the housing (10) in such a way that the connection lead (1) allocated to the mobile telephone can be directly connected via a connector (1.2).

17. Circuit arrangement as claimed in any one of Claims 13 to 16, **characterised in that** a low-frequency amplifier is provided for generating a low-frequency signal for an external or an attached loudspeaker (2), wherein the low-frequency amplifier is preferably designed as a two-way amplifier, in such a way that the "listen" signal is amplified and transmitted to the loudspeaker output, while a signal is picked up by an external microphone and led, amplified and adapted, to the output that is connected to the input of the mobile telephone.

18. Circuit arrangement as claimed in Claim 16 or 17, **characterised in that** the low-frequency amplifier is provided in the connection lead (1) connector (1.2) that is allocated to the mobile telephone.

19. Circuit arrangement as claimed in any one of Claims 13 to 18, **characterised in that** when a "make a call" signal is present, a signal is generated and put out which, as a "MUTE" signal, causes a car radio to be muted.

## Revendications

1. Dispositif permettant de maintenir et de faire fonctionner des téléphones mobiles dans des véhicules équipés d'un réseau de bord électrique, comportant un boîtier dans lequel est prévue une disposition de circuit présentant au moins un circuit d'adaptation pour l'antenne, et comportant un boîtier pouvant être fixé à la paroi de l'habitacle, dans lequel est prévu, pour garantir l'alimentation en courant de la disposition de circuit depuis le réseau de bord, un câble de raccordement (2.1) présentant une fiche de connexion (2 ; 3) enfichable dans l'une des prises du réseau de bord et pouvant y être fixée, **caractérisé en ce que** la paroi inteme de l'habitacle du véhicule présente des moyens permettant de fixer de façon amovible le boîtier (10) contenant la carte imprimée (30) sur laquelle est formée la disposition de circuit, un boulon central (7) comportant une embase de boulon (9) et une tige de boulon (8) et permettant un pivotement du boîtier (10) étant prévu pour fixer de façon amovible le boîtier.

2. Dispositif selon la revendication 1, **caractérisé en ce que** le boîtier (10) et/ou le boulon central (7) sont pourvu(s) de clips ou de moyens d'arrêt inverses l'un par rapport à l'autre et concourants, le boîtier (10) et la carte imprimée (30) présentant un percement (12) pour passer le boulon central (7) qui reçoit ce boîtier (10) de façon pivotante et au moins en partie par engagement mécanique.

3. Dispositif selon la revendication 2, **caractérisé en ce qu**'est prévu en tant que boulon central (7) une fixation (40) sur laquelle est placée une plaque de base (41) pouvant être fixée sur la paroi, plaque sur laquelle sont disposés au moins deux bras de retenue (42) en tant que paire de bras de retenue, dont les extrémités pourvues d'ergots d'encliquetage (43) agissent avec des moyens d'arrêt inverses du boîtier (10), ainsi que par une plaque d'appui (45), qui agissent par le biais d'un organe coulissant avec des empattements (49) fixés aux bras de retenue (42) de façon telle que, lors d'une pression sur la plaque d'appui (45), les bras de retenue (42) se plient l'un vers l'autre.

4. Dispositif selon l'une des revendications 1 à 3, **caractérisé en ce que** le boîtier (10) est formé d'une coque supérieure (11.1) et d'une coque inférieure (11.2) qui peuvent être rassemblées par encliquetage, le boîtier (10) présentant une rainure d'encliquetage périphérique (12.1) et le boulon central (7) des ergots d'encliquetage ou une baguette d'encliquetage périphérique (7.1) correspondant à la rainure d'encliquetage (12.1).

5. Dispositif selon la revendication 4, **caractérisé en ce que** le boîtier (10) logeant la carte imprimée (30) présente un bord périphérique aplati sur lequel est prévu un évidement (13) permettant de loger un tableau de connexions (34) prévu sur la carte imprimée (30).

6. Dispositif selon l'une des revendications 1 à 5, **caractérisé en ce que** le boîtier (10) est pourvu d'au moins une connexion BF permettant de raccorder un haut-parleur, laquelle est de préférence conçue en tant que prise en sortie (25) pour haut-parleur externe, le haut-parleur externe pouvant être raccordé étant de préférence celui de l'autoradio.

7. Dispositif selon l'une des revendications 1 à 6, **caractérisé en ce que** l'on peut raccorder au boîtier (10) au moins un boîtier de haul-parleur (22) avec haut-parleur, le haut-parleur étant de préférence appliqué de façon à pouvoir se rabattre contre le boîtier (10), et le boîtier de haut-parleur (22) présentant de chaque côté des bras (23) qui sont articulés latéralement au niveau du boîtier (10), les bras (23) étant pourvus de connexions BF (24) qui sont en liaison par contact dans la zone de l'articulation avec une sortie BF ici prévue.

8. Dispositif selon l'une des revendications 1 à 7, **caractérisé en ce qu**'est prévu pour l'alimentation en courant depuis le réseau de bord un câble de raccordement (2) équipé d'une fiche de connexion (3) conçue en tant que connecteur à serrage, qui, enfichée dans la fiche femelle, peut y être verrouillée, de préférence au moyen d'éléments de serrage prévus au niveau du corps de connecteur cylindrique (4) enfichable dans la fiche femelle.

9. Dispositif selon la revendication 8, **caractérisé en ce qu**'est prévu en tant qu'élément de serrage un tiroir rotatif (5) qui peut pivoter autour de l'axe du corps de connecteur cylindrique (4), le tiroir rotatif (5) présentant une bague tournante (5.1) amenée dans la tête de connecteur (3.1), à laquelle est raccordé un bras de serrage (5.3) dont l'extrémité libre est amenée dans une glissière de guidage en spirale (5.5), se déplace radialement vers l'intérieur ou vers l'extérieur lors d'un pivotement, en fonction du sens de rotation, l'extrémité libre du bras de serrage (5.3) étant conçue en tant que clavette de guidage (5.4) et la glissière de guidage en spirale (5.5) formant une partie de l'étendue de la rainure périphérique qui, en commençant avec un diamètre plus petit que le diamètre du corps de connecteur (4), entre approximativement tangentiellement dans la surface d'enveloppe du corps du connecteur (4).

10. Dispositif selon la revendication 8 ou 9, **caractérisé en ce que** la sortie de câble (3.3) sortant du câble de raccordement est articulée par le biais d'une articulation (4.6) dont l'axe de pivotement est disposé perpendiculairement à l'axe du connecteur et peut pivoter au niveau de la tête de connecteur (3.1).

11. Dispositif selon l'une des revendications 1 à 10, **caractérisé en ce que** la tête de connecteur (3.1) ou la sortie de câble (3.3) articulée de façon à pouvoir pivoter présente un espace creux permettant de loger des composants électroniques, disposés de préférence sur une carte imprimée (4.5), une chambre centrale (4.3) étant de préférence prévue entre la tige du raccordement en tension (4.1) et la carte imprimée (4.5), en particulier pour loger un tube de sécurité (4.4).

12. Dispositif selon la revendication 11, **caractérisé en ce que** l'électronique prévue dans la tête de connecteur (3.1) ou dans la sortie de câble articulée de façon à pouvoir pivoter (3.3) présente un amplificateur BF et une fiche de connexion pour haut-parleur externe.

13. Disposition de circuit pour le dispositif selon l'une des revendications 1 à 12, **caractérisée en ce qu**'est ensuite généré depuis l'amplification BF un signal SOURDINE, émis pour mettre en sourdine l'autoradio lorsqu'une basse fréquence à amplifier existe, les composants générant le signal SOURDINE présentant de préférence une constante de temps qui est capable de ponter les inactivités de parole au niveau du téléphone.

14. Disposition de circuit selon la revendication 13, **caractérisée en ce qu**'au moins la sortie coordonnée au téléphone mobile de la disposition de circuit est amenée à une prise (36) dans laquelle le câble de raccordement (1) à la fiche de raccordement (prise « plug in ») (1.2) côté téléphone mobile peut être enfiché dans une prise multipôle.

15. Disposition de circuit selon la revendication 13 ou 14, **caractérisée en ce qu**'une prise en sortie pour liaison basse fréquence est prévue pour au moins un casque d'écoute composé d'un écouteur ou d'un écouteur auriculaire et d'un microphone.

16. Disposition de circuit présentant un circuit d'adaptation pour l'adaptation d'antenne, ainsi qu'un circuit d'adaptation pour l'adaptation de l'alimentation (de charge) en courant selon l'une des revendications 13 à 15, **caractérisée en ce que** les circuits d'adaptation sont prévus sur une carte imprimée (30), au moins les entrées et les sorties du circuit coordonnées au téléphone mobile débouchant dans une prise en sortie (36), au moins une des sorties (36 ; 37 ; 37,1; 38) et/ou l'entrée (39) étant prévu(es) sur un tableau de connexions (34) placé sur la carte imprimée (30), lequel est disposé dans un évidement (13) du boîtier (10) de façon telle que le câble de raccordement (1) coordonné au téléphone mobile peut être raccordé directement par une fiche de connexion (1.2).

17. Disposition de circuit selon l'une des revendications 13 à 16, **caractérisée en ce qu**'est prévu un amplificateur basse fréquence pour générer un signal BF pour un haut-parleur externe ou raccordé (20), l'amplificateur BF étant de préférence conçu en tant qu'amplificateur à deux voies de façon telle que le signal "écoute" émis par le téléphone mobile est amplifié et dirigé vers la sortie haut-parleur, tandis qu'un signal d'un microphone exteme est reçu et dirigé, amplifié et adapté, à la sortie reliée à l'entrée du téléphone mobile.

18. Disposition de circuit selon la revendication 16 ou 17, **caractérisée en ce que** l'amplificateur BF est prévu dans la fiche (1.2) coordonnée au téléphone mobile du câble de raccordement (1).

19. Disposition de circuit selon l'une des revendications 13 à 18, **caractérisée en ce que,** lors de l'application d'un signal "téléphoner", un signal est généré et émis, lequel agit en tant que signal "SOURDINE" pour mettre en sourdine un autoradio.
